**Europäisches Patentamt**

**European Patent Office**

**Office européen des brevets**

(11) Veröffentlichungsnummer: **0 290 810**
**A2**

## (12) EUROPÄISCHE PATENTANMELDUNG

(21) Anmeldenummer: 88106005.7

(22) Anmeldetag: 15.04.88

(51) Int. Cl.⁴: **B28D 1/18** , **B23C 5/08** , **B23C 5/22**

(30) Priorität: 14.05.87 DE 8706935 U

(43) Veröffentlichungstag der Anmeldung:
17.11.88 Patentblatt 88/46

(84) Benannte Vertragsstaaten:
**AT CH DE ES FR GB IT LI NL**

(71) Anmelder: **Impex-Essen Vertrieb von Werkzeugen GmbH**
**Dürrnerstrasse 1 Postfach 1463**
**D-8800 Ansbach(DE)**

(72) Erfinder: **Biersack, Horst**
**Weinbergstrasse 16**
**D-8802 Sachsen(DE)**

(74) Vertreter: **Sturies, Herbert et al**
**Patentanwälte Dr. Ing. Dipl. Phys. Herbert Sturies Dipl. Ing. Peter Eichler**
**Brahmsstrasse 29, Postfach 20 12 42**
**D-5600 Wuppertal 2(DE)**

(54) **Mehrschneidige Fräserscheibe.**

(57) Mehrschneidige, insbesondere mit Hartmetall-platten (3) bestückte Fräserscheiben (z. B. A) sind mit einer zentralen Einspannöffnung (5) versehen und dienen insbesondere zur Herstellung von Nuten in Mauerwerk od. dgl..

Um solche Fräserscheiben besonders einfach und kostengünstig herstellen zu können, ohne daß dadurch die Qualität der Fräserscheibe beeinträchtigt wird, besteht die Fräserscheibe (z. B. A) aus mehreren flach aufeinanderliegenden und miteinander verlöteten, dünnen Einzelscheiben (1). Aufgrund ihrer geringen Stärke lassen sich solche Einzelscheiben (1) sehr präzise in einem Arbeitsgang spanlos stanzen und soweit erforderlich dabei zugleich auch schränken.

Fig.5

## Mehrschneidige Fräserscheibe

Die Erfindung bezieht sich auf eine mehrschneidige, insbesondere mit Hartmetallplatten bestückte Fräserscheibe mit zentraler Einspannöffnung, insbesondere für die Herstellung von Nuten in Mauerwerk od. dgl..

Bekannte Fräserscheiben obiger Art bestehen aus verhältnismäßig dicken, etwa fünf Millimeter starken Stahlscheiben, deren Außenkontur und auch die Aussparungen für die Aufnahme der Hartmetallplatten spanabhebend im Fräsverfahren hergestellt werden. Um verschieden breite Nuten im Mauerwerk herstellen zu können, werden die die Hartmetallplatten tragenden Zähne wechselseitig geschränkt oder bei noch größeren Fräsbreiten zwei Fräserscheiben nebeneinander auf der Fräsmaschinenwelle eingespannt. Da als Fräseraufnahme zumeist mit Gewinde versehene Frässpindeln dienen, wird in die zentrale Einspannöffnung der bekannten Fräserscheiben vielfach noch eine Büchse mit entsprechendem Innengewinde eingelötet oder auch formschlüssig darin befestigt, wobei die Büchse wiederum spanabhebend hergestellt wird. All das bedingt eine aufwendige und teure Fertigung der bekannten Fräserscheiben.

Der Erfindung liegt demgegenüber die Aufgabe zugrunde, eine Fräserscheibe der eingangs erwähnten Gattung zu schaffen, die wesentlich einfacher und kostengünstiger hergestellt werden kann, ohne daß dadurch die Qualität der Fräserscheibe etwa beeinträchtigt wird. Diese Aufgabe wird erfindungsgemäß im wesentlichen dadurch gelöst, daß die Fräserscheibe aus mehreren flach aufeinanderliegenden und miteinander verlöteten, dünnen Einzelscheiben besteht. Aufgrund ihrer geringen Stärke lassen sich solche Einzelscheiben sehr präzise in einem Arbeitsgang spanlos stanzen und soweit erforderlich dabei zugleich auch schränken.

Vorteilhaft sind die Einzelscheiben im Bereich ihrer Schneidzähne mit im wesentlichen U-förmigen Aussparungen zur Aufnahme der darin eingesteckten und verlöteten Hartmetallplatten versehen. Dabei verläuft die in Umlaufrichtung der Fräserscheibe vornliegende Kante der U-förmigen Aussparungen zweckmäßig leicht hinterschnitten und geht in eine mit einer Einführschräge versehene Klemmstelle für die eingepreßte Hartmetallplatte über. Dadurch können die Hartmetallplatten in die Aussparungen der entsprechend deckungsgleich übereinanderliegenden Einzelscheiben federnd eingeklemmt werden, so daß sie beim nachfolgenden Löten nicht verrutschen. Das Ausrichten der Einzelscheiben und Einklemmen der Hartmetallplatten kann dadurch erleichtert werden, daß die Einzelscheiben mit deckungsgleich liegenden Zentrierhilfslöchern versehen werden.

Um besonders breite Frässchnitte, -nuten od. dgl. zu erzielen, kann die Fräserscheibe auch aus zwei oder mehreren miteinander verlöteten Einzelscheiben-Paketen bestehen, deren mit Hartmetallplatten bestückte Zähne umfangsmäßig versetzt zueinander liegen. Weiterhin können außer den die Hartmetallplatten tragenden Einzelscheiben auch damit verlötete Beilagscheiben zur Vergrößerung der Fräsereinspannbreite oder auch der Fräsbreite vorgesehen sein. Dabei werden die Einzelscheiben, die Hartmetallplatten und auch die Beilagscheiben in einem Arbeitsgang vorzugsweise im Durchlaufverfahren miteinander verlötet. In die Wandung der gemeinsamen zentralen Einspannöffnungen von Einzel- und Beilagscheiben kann ein Aufschraubgewinde eingeschnitten sein.

Schließlich sieht die Erfindung noch vor, daß die deckungsgleich übereinander liegenden zentralen Einspannöffnungen der Einzel- und ggfs. auch Beilagscheiben ein bezüglich der aufeinander senkrecht stehenden x-und y-Achse unsymmetrisches Unrundprofil besitzen. Dadurch wird sichergestellt, daß die Fräserscheibe nicht verkehrt sondern stets ordnungsgemäß auf die Fräserwelle aufgesetzt bzw. aufgespannt werden kann.

In der Zeichnung sind mehrere Ausführungsbeispiele erfindungsgemäß beschaffener mehrschneidiger und mit Hartmetallplatten bestückter Fräserscheiben dargestellt. Dabei zeigen

Fig. 1 und 2 eine erste besonders einfache Ausführungsform in der Draufsicht und Seitenansicht,

Fig. 3 eine vergrößerte Seitenteilansicht auf einen mit einer eingeklemmten Hartmetallplatte versehenen Schneidzahnbereich,

Fig. 4 eine aus zwei miteinander verlöteten Einzelscheiben-Paketen bestehende Fräserscheibe in der Seitenansicht,

Fig. 5 einen Schnitt nach der Linie V-V der Fig. 4,

Fig. 6 eine der Fig. 5 im wesentlichen entsprechende Darstellung einer weiteren aus zwei Einzelscheiben-Paketen bestehende Fräserscheiben-Ausführungsform und

Fig. 7 eine entsprechende Teilschnittdarstellung einer aus miteinander verlöteten Einzel- und Beilagscheiben bestehenden Fräserscheibe.

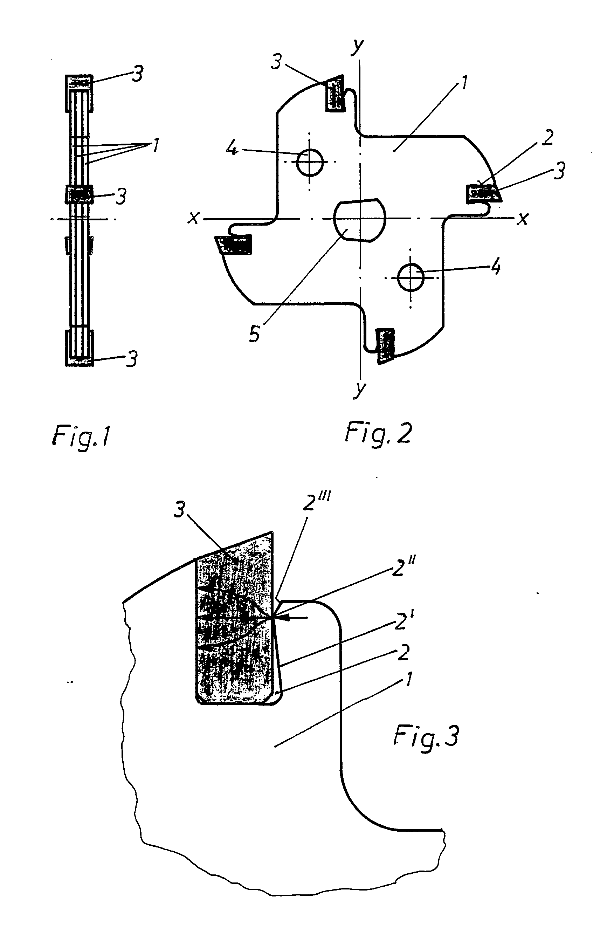

Die in den Fig. 1 und 2 dargestellte Fräserscheibe besteht aus mehreren flach aufeinanderliegenden und miteinander verlöteten, dünnen gestanzten Einzelscheiben 1, die im Bereich ihrer Schneiden mit im wesentlichen U-förmigen Aussparungen 2 zur Aufnahme der darin eingesteckten und verlöteten Hartmetallplatten 3 versehen sind.

Wie insbesondere Fig. 3 zeigt, verläuft die in Umlaufrichtung der Fräserscheibe vorn liegende Kante 2' der U-förmigen Aussparung 2 leicht hinterschnitten, so daß sich eine verhältnismäßig weit außen liegende Klemmstelle 2" für die in die Aussparung 2 eingepreßte Hartmetallplatte 3 ergibt. Zur Klemmstelle 2 d' führt von außen eine Einführschräge 2''', die das Einsetzen und Einpressen der Hartmetallplatte 3 in die Aussparung 2 noch vereinfacht. Um die Einzelscheiben 1 in ihre zum Einsetzen der Hartmetallscheiben 3 deckungsgleiche Lage zu bringen, sind in ihnen noch Zentrierhilfslöcher 4 vorhanden, die ein entsprechend ausgerichtetes Einspannen der Einzelscheiben 1 ermöglichen. Nach dem Einklemmen der Hartmetallplatten 3 in die deckungsgleich übereinanderliegenden Einzelscheiben 1 werden diese Teile im Durchlaufverfahren hart miteinander verlötet, wodurch sich eine innige feste Verbindung dieser Teile zu einer werkzeuggerechten Fräserscheibe ergibt.

Um zu verhindern, daß die Fräserscheibe nicht etwa verkehrt auf der Fräserwelle aufgespannt werden kann, sind die deckungsgleich übereinanderliegenden zentralen Einspannöffnungen 5 der Einzelscheiben 1 so ausgebildet, daß sie ein bezüglich der aufeinander senkrecht stehenden x-und y-Achse unsymmetrisches Unrundprofil besitzen.

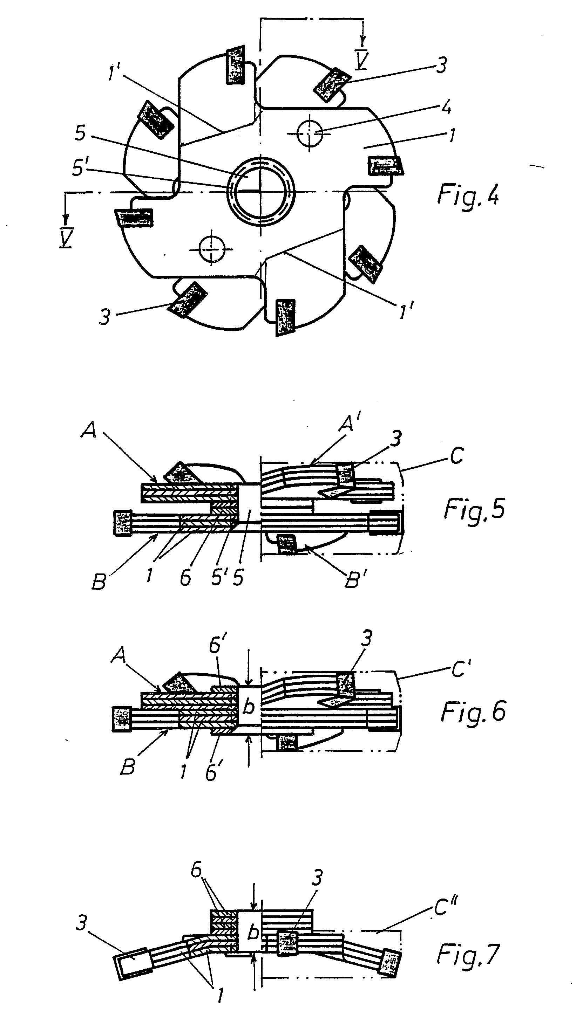

Bei der in Fig. 4 und 5 dargestellten Fräserscheibe sind zwei aus je drei flach aufeinanderliegenden Einzelschei ben 1 bestehende Scheibenpakete A, B vorhanden, die zusammen mit den zwischen ihnen liegenden Beilagscheiben 6 und den Hartmetallplatten 3 miteinander verlötet sind. Einige Schneidzähne A', B' der beiden Einzelscheiben-Pakete A, B sind hier nach außen geschränkt, wodurch sich hier ein besonders breiter, strichpunktiert angedeuteter Fräsbereich C ergibt. Die die Schränkung andeutenden Biegelinien 1' sind in Fig. 4 kenntlich gemacht. Die Beilagscheiben 6 tragen zugleich zur Vergrößerung der Einspannbreite des Fräswerkzeuges bei. Wie in Fig. 5 angedeutet ist, kann in die Wandung der gemeinsamen zentralen Einspannöffnungen 5 der Einzelscheiben 1 und Beilagscheiben 6 ein Schraubgewinde 5' zum Aufschrauben auf eine Fräserwelle eingeschnitten sein.

Die Fig. 6 zeigt eine Fräserscheibe, die ähnlich wie die in Fig. 5 dargestellte aus zwei Einzelscheiben-Paketen A, B besteht, die aber hier unmittelbar aufeinanderliegen, während die beiden Beilagscheiben 6' außen angeordnet sind, so daß sie zusammen mit den Einzelscheiben 1 die gleiche Einspannbreite b geben, wobei die strichpunktiert angedeutete Fräsbreite C' aber entsprechend kleiner ist.

Schließlich zeigt Fig. 7 eine lediglich aus drei mit Hartmetallplatten 3 bestückten Einzelscheiben 1 und auf deren einer Seite angeordneten Beilagscheiben 6 bestehende Fräserscheibe, die leichsweise kleiner Fräsbreite C" eine vergleichsweise große Einspannbreite b besitzt.

In allen Fällen bestehen die Einzelscheiben 1 sowie die Beilagscheiben 6 aus einfachen gestanzten Metall-insbesondere Stahlscheiben, die allesamt gemeinsam mit den Hartmetallplatten 3 hart miteinander verlötet sind. Soweit die Einzelscheiben geschränkte Zähne besitzen, werden die Schränkungen auch bereits beim Stanz-bzw. entsprechenden Verformungsvorgang erzeugt. Da das deckungsgleiche Zusammensetzen der Einzelscheiben 1 und ggfs. der Beilagscheiben 6 sowie das Einsetzen der Hartmetallplatten 3 und gemeinsame Verlöten all dieser Teile verhältnismäßig einfach in einem Arbeitsgang kontinuierlich vorgenommen werden können, ist die Herstellung solcher Fräserscheiben äußerst kostengünstig.

## Ansprüche

1. Mehrschneidige, insbesondere mit Hartmetallplatten bestückte Fräserscheibe mit zentraler Einspannöffnung, insbesondere für die Herstellung von Nuten in Mauerwerk od. dgl., **dadurch gekennzeichnet**, daß die Fräserscheibe aus mehreren flach aufeinanderliegenden und miteinander verlöteten, dünnen Einzelscheiben (1) besteht.

2. Fräserscheibe nach Anspruch 1, **dadurch gekennzeichnet**, daß die Einzelscheiben (1) im Bereich ihrer Schneidzähne mit im wesentlichen U-förmigen Aussparungen (2) zur Aufnahme der darin eingesteckten und verlöteten Hartmetallplatten (3) versehen sind.

3. Fräserscheibe nach Anspruch 2, **dadurch gekennzeichnet**, daß die in Umlaufrichtung der Fräserscheibe vornliegende Kante (2') der U-förmigen Aussparung (2) leicht hinterschnitten verläuft und in eine mit einer Einführschräge (2''') versehene Klemmstelle (2") für die eingepreßte Hartmetallplatte (3) übergeht. (Fig. 3)

4. Fräserscheibe nach Anspruch 3, **dadurch gekennzeichnet**, daß die Einzelscheiben (1) mit deckungsgleich liegenden Zentrierhilfslöchern (4) zum Einpressen der Hartmetallplatten (3) versehen sind.

5. Fräserscheibe nach einem der Ansprüche 1 bis 4, **dadurch gekennzeichnet**, daß sie aus zwei oder mehreren miteinander verlöteten Einzelscheiben-Paketen (A, B) besteht, deren mit Hartmetallplatten (3) bestückte Zähne umfangsmäßig versetzt zueinander liegen. (Fig. 4 bis 6)

6. Fräserscheibe nach einem der Ansprüche 1 bis 5, **dadurch gekennzeichnet**, daß die Einzelscheiben (1) paketweise geschränkt sind. (Fig. 4 bis 7)

7. Fräserscheibe nach einem der Ansprüche 1 bis 6, **dadurch gekennzeichnet**, daß außer den die Hartmetallplatten (3) tragenden Einzelscheiben (1) damit verlötete Beilagscheiben (6) zur Vergrößerung der Fräserschneid-und/oder -einspannbreite vorgesehen sind.

8. Fräserscheibe nach Anspruch 7, **dadurch gekennzeichnet**, daß in die Wandung der gemeinsamen zentralen Einspannöffnungen (5) von Einzel- und Beilagscheiben (1 bzw. 6) ein Aufschraubgewinde (5') eingeschnitten ist.

9. Fräserscheibe nach einem der Ansprüche 1 bis 7, **dadurch gekennzeichnet**, daß die deckungsgleich übereinanderliegenden zentralen Einspannöffnungen (5) der Einzel-und gegebenenfalls auch Beilagscheiben (1, 6) ein bezüglich der aufeinander senkrecht stehenden x-und y-Achse unsymmetrisches Unrundprofil besitzen. (Fig. 2)

Fig.1

Fig. 2

Fig.3

Fig. 4

Fig. 5

Fig. 6

Fig. 7